# EUROPÄISCHE PATENTANMELDUNG

(11) **EP 3 324 328 A1**
(43) Veröffentlichungstag der Anmeldung: **23.05.2018**
(21) Anmeldenummer: 16002454.3
(22) Anmeldetag: 18.11.2016
(51) Int. Cl.: G06F 21/86, G06F 1/20

(54) **COMPUTERSYSTEM**

(71) Anmelder: Janz Tec AG, 33100 Paderborn (DE)
(72) Erfinder: RENNERICH, Michael, 33106 Paderborn (DE)
(74) Vertreter: Rieke, Andreas

(57) **Zusammenfassung**

Bei einem in einem Gehäuse (2) angeordneten, zugriffgeschützten Computersystem (1) werden mechanische Manipulationen an dem Gehäuse (2) erkannt und wird bei einer erkannten mechanischen Manipulation ein Zugriff auf das Computersystem (1) gesperrt und/oder werden Daten gelöscht.

## Beschreibung

Die Erfindung betrifft ein in einem Gehäuse angeordnetes, zugriffgeschütztes Computersystem.

Computersysteme sind in vielfältigen Ausführungsformen bekannt und bewährt. Passwörter, Verschlüsselungen oder dergleichen bieten einen gewissen Schutz vor dem Zugriff von Unbefugten auf sensible Daten, die auf einem solchen Computersystem abgelegt sind.

Vor Vandalismus, Diebstahl oder Hardware-Manipulationen sind die bekannten Computersysteme jedoch ungeschützt. Vor diesem Hintergrund macht die Erfindung es sich zur Aufgabe, ein in Rede stehendes Computersystem zur Verfügung zu stellen, das diese Problematik löst.

Dies erfolgt gemäß des Anspruchs 1 bei einem in einem Gehäuse angeordneten, zugriffgeschützten Computersystem durch die Maßnahme, dass mechanische Manipulationen an dem Gehäuse erkannt werden und dass bei einer erkannten mechanischen Manipulation ein Zugriff auf das Computersystem gesperrt wird und/oder Daten gelöscht werden.

Ein solchermaßen geschütztes Computersystem verhindert sicher den Zugriff auf sensible Daten durch Unbefugte, beispielsweise nach einem Diebstahl, einem Ausbau einer Festplatte oder dergleichen mehr.

In konstruktiver Ausgestaltung hat es sich dabei als zweckmäßig erwiesen, wenn das Gehäuse lediglich durch zwei aufeinandergesetzte Halbschalen ausgebildet wird. Solches erlaubt die Ausbildung des Gehäuses in einer sehr stabilen Form.

Darüber hinaus ist es dann in einfacher Weise möglich, ein unerlaubtes Öffnen des Gehäuses festzustellen, wenn in konstruktiver Ausgestaltung vorgesehen ist, dass in einer Halbschale wenigstens ein Stift angeordnet ist, der bei einem Öffnen der aufeinandergesetzten Halbschalen einen Stromkreis öffnet oder schließt derart, dass das Computersystem gesperrt wird und/oder Daten gelöscht werden.

Dabei kann ein derartiger Stift selbst Bestandteil eines solchen Stromkreises sein, alternativ und bevorzugt wird jedoch, dass durch einen solchen Stift ein Mikroschalter betätigt wird.

Der Manipulationssicherheit dient weiter die Maßnahme, dass die Halbschalen umlaufend ineinandergreifend ausgebildet sind, vorzugsweise unter Einbeziehung eines Dichtungsrings. Das Gehäuse des Computersystems nach der Erfindung ist damit auch spritzwassergeschützt ausbildbar.

Insbesondere wird jedoch durch diese Maßnahme verhindert, dass ein Werkzeug in das Gehäuseinnere eingebracht werden kann, um beispielsweise die Halbschalen auseinander zu hebeln.

In weiterer konstruktiver Ausgestaltung ist vorgesehen, dass das Gehäuse innenseitig mit Bohrschutzfolien belegt ist und dass bei einer Beschädigung der Bohrschutzfolien ein Stromkreis geöffnet oder geschlossen wird derart, dass ein Zugriff auf das Computersystem gesperrt wird und/oder Daten gelöscht werden. Derartige Folien mit einer Vielzahl von Leiterbahnen sind bekannt. Wird versucht, das Gehäuse aufzubohren, wird eine solche Leiterbahn unterbrochen oder werden Leiterbahnen kurzgeschlossen, und daraufhin das Computersystem gesperrt und/oder werden sensible Daten gelöscht.

In weiterer Ausgestaltung des Computersystems nach der Erfindung ist vorgesehen, dass ein Beschleunigungssensor und/oder ein GPS-Kommunikator in dem Gehäuse vorgesehen ist und dass bei oder nach der Feststellung einer Ortsveränderung ein Zugriff auf das Computersystem gesperrt wird und/oder Daten gelöscht werden.

Sowohl der Beschleunigungssensor als auch ein GPS-Kommunikator dienen der Standortüberwachung des Computersystems nach der Erfindung. Über den Beschleunigungssensor kann von einer zentralen Stelle, die das Computersystem nach der Erfindung überwacht, augenblicklich eine Standortverlagerung festgestellt werden. Ein GPS-Empfänger bietet den Vorteil, dass bei einem ausgeschalteten Computersystem eine Standortverlagerung zwar erfolgen kann, bei dem anschließenden Bootvorgang jedoch durch den GPS-Empfänger festgestellt werden kann, dass eine Ortsveränderung stattgefunden hat. Es wird auch in einem solchen Fall der Zugriff auf das Computersystem gesperrt und/oder werden sensible Daten gelöscht werden. Handelt es sich bei dem GPS-Kommunikator um einen kombinierten Empfänger/Sender, so kann darüber hinaus der Standort des Computersystems nach der Erfindung nach einer Ortsverlagerung erkannt werden.

In weiterer konstruktiver Ausgestaltung ist daran gedacht, dass eine einzige Platine vorgesehen ist, dass die lüfterlose Platine in einer der beiden Halbschalen des Gehäuses festgelegt ist und dass die Prozesswärme über eine kühlkörperartig ausgebildete Halbschale abgeführt wird, wobei insbesondere daran gedacht ist, die Halbschale kühlkörperartig bspw. mit Rippen zu versehen, in der auch die Platine festgelegt ist.

Aufgrund dieser Maßnahme kann das Computersystem nach der Erfindung äußerst kompakt gestaltet werden. Darüber hinaus können Anschlüsse aller Art oberseitig angeordnet werden, was dann insbesondere von Vorteil ist, wenn eine untere Halbschale des Gehäuses mit Flanschen für ein Festschrauben versehen ist. Eine Verschraubung von unten der beiden Halbschalen ist damit nicht mehr zugänglich.

Ebenso wenig ist ein in dem Boden einer unteren Halbschale mit Schrauben festgelegter Deckel zugänglich, der ausschließlich das Einbringen von SIM-Karten und/oder den mechanischen Zugriff auf Festplatte erlaubt.

In weiterer Ausgestaltung des Computersystems nach der Erfindung ist ein Energiespeicher vorgesehen durch den während einer stromlosen Phase des Computersystems die Schutzfunktionen durch den wenigstens einen Stift, die Bohrschutzfolien, den Beschleunigungssensor und/oder den GPS-Kommunikator aufrechterhalten werden. Als Energiespeicher kann eine Batterie, ein Akkumulator oder gegebenenfalls auch ein Kondensator Verwendung finden.

Ist die Kapazität des Energiespeichers erschöpft, ist weiter vorgesehen, dass bei einem Unterschreiten eines Sollwerts der Versorgungsspannung des Energiespeichers ein Zugriff auf das Computersystem gesperrt wird und/oder Daten gelöscht werden.

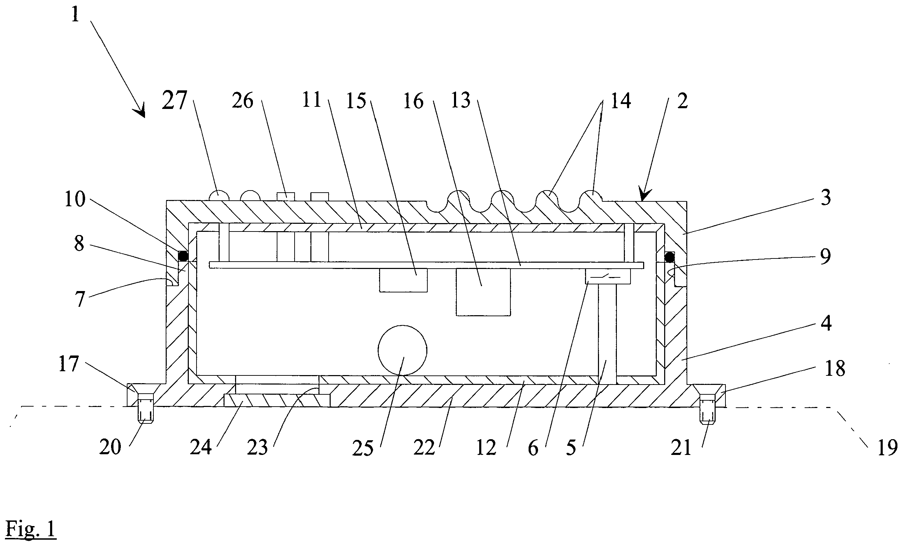

Das Computersystem nach der Erfindung wird anhand der Zeichnung näher erläutert, deren einzige Figur 1 einen nicht maßstabsgerechten Querschnitt durch das Computersystem wiedergibt.

Das im Schnitt in der Figur 1 dargestellte Computersystem 1 weist ein Gehäuse 2 auf, das lediglich durch eine obere Halbschale 3 und eine untere Halbschale 4 ausgebildet wird. In der unteren Halbschale 4 ist ein Stift 5 angeordnet, der bei einem Öffnen der aufeinandergesetzten Halbschalen 3,4 bei dem Ausführungsbeispiel einen lediglich angedeuteten Mikroschalter 6 öffnet oder schließt, womit das Computersystem 1 erkennen kann, dass eine unautorisierte Öffnung des Gehäuses 2 vorliegt und daraufhin den Zugriff auf Daten sperren oder diese Daten löschen wird.

Des weiteren sind die beiden Halbschalen 3,4 ineinandergreifend ausgebildet, indem der Oberseite 7 der unteren Halbschale 4 an deren inneren Rand eine Stufe 8 vorsteht, die in eine entsprechende Ausnehmung 9 der oberen Halbschale 3 eingreift. In der Ausnehmung 9 ist weiter ein Dichtungsring 10 noch angeordnet.

Lediglich angedeutet und von der Materialstärke deutlich überhöht ist in der Figur 1 dargestellt, dass das Gehäuse 2 innenseitig mit Bohrschutzfolien 11,12 belegt ist, bei deren Beschädigung der Zugriff auf Daten wieder gesperrt wird oder d ie Daten gelöscht werden.

Der Schnitt gemäß Figur 1 lässt ferner lediglich eine einzige Platine 13 für die gesamte Elektronik erkennen, die in der oberen Halbschale 3 festgelegt ist. Für eine Kühlung insbesondere des oder der Prozessoren ist kein Lüfter vorgesehen, sondern wird die Prozesswärme über Rippen 14 der kühlkörperartig ausgebildeten oberen Halbschale 3 abgeführt.

Weiter sind auf der Platine 13, lediglich angedeutet, ein Beschleunigungssensor 15 und ein GPS-Kommunikator 16 vorgesehen, die eine Standortverlagerung des Computersystems 1 nach der Erfindung detektieren.

Die untere Halbschale 4 des Gehäuses 2 ist weiter mit Flanschen 17,18 versehen, die ein Festlegen des Gehäuses 2 des Computersystems 1 auf einem Träger 19 mit Schrauben 20,21 erlauben. Damit ist eine in der Zeichnung nicht dargestellte Verschraubung der beiden Halbschalen 3,4 von unten nicht mehr zugänglich.

Ebenso wenig zugänglich ist dann die in dem Boden 22 der unteren Halbschale 4 vorgesehene Öffnung 23, die von einem Deckel 24 verschlossen wird. Nach einem Lösen der Verschraubung des Deckels 24 können beispielsweise SIM-Karten eingebracht werden oder ist eine interne Festplatte des Computersystems zugänglich.

Weiter ist lediglich schamatisch ein Energiespeicher 25 vorgesehen. Wird das Computersystems 1 von einer externen Stromversorgung getrennt, werden durch den Energiespeicher 25 die Schutzfunktionen durch den wenigstens einen Stift 5, die Bohrschutzfolien 11,12, den Beschleunigungssensor 15 und/oder den GPS-Kommunikator 16 aufrechterhalten.

Da dies zeitlich nicht unbeschränkt möglich ist, wird bei einer Erschöpfung des Energiespeichers 25, bei einem Unterschreiten eines Sollwerts der Versorgungsspannung ein Zugriff auf das Computersystem 1 gesperrt und/oder werden Daten gelöscht werden.

Bei dem dargestellten Ausführungsbeispiel sind oberseitig die Steckverbindungen 26 für die diversen Anschlüsse sowie Leuchtdioden 27 für die Anzeige des Betriebszustandes noch vorgesehen.

**Bezugszeichenliste:**

| | | | |
|---|---|---|---|
| 1. | Computersystem | 27. | LED |
| 2. | Gehäuse | | |
| 3. | obere Halbschale | | |
| 4. | untere Halbschale | | |
| 5. | Stift | | |
| 6. | Mikroschalter | | |
| 7. | Oberseite | | |
| 8. | Stufe | | |
| 9. | Ausnehmung | | |
| 10. | Dichtungsring | | |
| 11. | Bohrschutzfolie | | |
| 12. | Bohrschutzfolie | | |
| 13. | Platine | | |
| 14. | Rippe | | |
| 15. | Beschleunigungssensor | | |
| 16 . | GPS-Kommunikator | | |
| 17. | Flansch | | |
| 18. | Flansch | | |
| 19. | Träger | | |
| 20. | Schraube | | |
| 21. | Schraube | | |
| 22. | Boden | | |
| 23 . | Öffnung | | |
| 24. | Deckel | | |
| 25. | Energiespeicher | | |
| 26. | Steckverbindung | | |

## Patentansprüche

1. In einem Gehäuse angeordnetes, zugriffgeschütztes Computersystem, **dadurch gekennzeichnet, dass** mechanische Manipulationen an dem Gehäuse (2) erkannt werden und dass bei einer erkannten mechanischen Manipulation ein Zugriff auf das Computersystem (1) gesperrt wird und/oder Daten gelöscht werden.

2. Computersystem nach Anspruch 1, **dadurch gekennzeichnet, dass** das Gehäuse (2) durch zwei aufeinandergesetzte Halbschalen (3,4) ausgebildet wird.

3. Computersystem nach Anspruch 2, **dadurch gekennzeichnet, dass** in einer Halbschale (4) wenigstens ein Stift (5) angeordnet ist, der bei einem Öffnen der aufeinandergesetzten Halbschalen (3,4) einen Stromkreis öffnet oder schließt derart, dass das Computersystem gesperrt wird und/oder Daten gelöscht werden.

4. Computersystem nach Anspruch 2 oder 3, **dadurch gekennzeichnet, dass** die Halbschalen (3,4) umlaufend ineinandergreifend ausgebildet sind.

5. Computersystem nach einem oder mehreren der vorangehenden Ansprüche, **dadurch gekennzeichnet, dass** das Gehäuse (2) innenseitig mit Bohrschutzfolien (11,12) belegt ist und dass bei einer Beschädigung der Bohrschutzfolien (11,12) ein Stromkreis geöffnet oder geschlossen wird derart, dass ein Zugriff auf das Computersystem (1) gesperrt wird und/oder Daten gelöscht werden.

6. Computersystem nach einem oder mehreren der vorangehenden Ansprüche, **dadurch gekennzeichnet, dass** ein Beschleunigungssensor (15) und/oder ein GPS-Kommunikator (16) in dem Gehäuse (2) vorgesehen ist und dass bei oder nach der Feststellung einer Ortsveränderung ein Zugriff auf das Computersystem (1) gesperrt wird und/oder Daten gelöscht werden.

7. Computersystem nach einem oder mehreren der vorangehenden Ansprüche, **dadurch gekennzeichnet, dass** eine einzige Platine (13) vorgesehen ist, dass die lüfterlose Platine (13) in einer der beiden Halbschale (3) des Gehäuses (2) festgelegt ist und dass die Prozesswärme über eine kühlkörperartig ausgebildete Halbschale (3) abgeführt wird.

8. Computersystem nach einem oder mehreren der vorangehenden Ansprüche, **dadurch gekennzeichnet, dass** eine untere Halbschale (4) des Gehäuses (2) mit Flanschen (18,19) für ein Festschrauben versehen ist.

9. Computersystem nach einem oder mehreren der vorangehenden Ansprüche, **dadurch gekennzeichnet, dass** in dem Boden (22) einer unteren Halbschale (4) ein mit Schrauben festgelegter Deckel (24) vorgesehen ist.

10. Computersystem nach einem oder mehreren der vorangehenden Ansprüche, **dadurch gekennzeichnet, dass** ein Energiespeicher (25) vorgesehen ist und dass während einer stromlosen Phase des Computersystems (1) der Energiespeicher (25) die Schutzfunktionen aufrechterhält.

11. Computersystem nach Anspruch 10, **dadurch gekennzeichnet, dass** bei einem Unterschreiten eines Sollwerts der Versorgungsspannung des Energiespeichers (25) ein Zugriff auf das Computersystem (1) gesperrt wird und/oder Daten gelöscht werden.
